# EUROPÄISCHE PATENTSCHRIFT

(11) **EP 1 313 969 B1**
(45) Veröffentlichungstag und Bekanntmachung des Hinweises auf die Patenterteilung: **26.05.2004**
(21) Anmeldenummer: 01956298.2
(22) Anmeldetag: 29.06.2001
(51) Int. Cl.: F16H 61/16, F16H 61/02

(54) **STEUERUNGSSYSTEM FÜR EIN KRAFTFAHRZEUG-AUTOMATIKGETRIEBE UND VERFAHREN ZUM BETREIBEN DES STEUERUNGSSYSTEMS**
CONTROL SYSTEM FOR A MOTOR VEHICLE AUTOMATIC GEARBOX AND METHOD FOR OPERATING SAID CONTROL SYSTEM
SYSTEME DE COMMANDE POUR UNE TRANSMISSION AUTOMATIQUE DE VEHICULE AUTOMOBILE ET PROCEDE DE FONCTIONNEMENT DUDIT SYSTEME DE COMMANDE

(30) Priorität: 23.08.2000 DE 10041441
(43) Veröffentlichungstag der Anmeldung: 28.05.2003
(73) Patentinhaber: ROBERT BOSCH GMBH, 70442 Stuttgart (DE)
(72) Erfinder: LOEFFLER, Juergen, 71638 Ludwigsburg (DE); BOLZ, Martin-Peter, 77815 Buehl (DE); HUELSER, Holger, 70329 Stuttgart (DE)
(86) Internationale Anmeldenummer: PCT/DE2001/002401
(87) Internationale Veröffentlichungsnummer: WO 2002/016806

(56) Entgegenhaltungen:
- DE-A- 4 311 886
- DE-A- 19 624 061
- DE-A- 19 749 132
- DE-A- 19 916 917
- US-A- 4 788 892

## Beschreibung

Die Erfindung bezieht sich auf ein Steuerungssystem nach dem Oberbegriff des Anspruchs 1. Sie betrifft weiter ein Verfahren zum Betreiben eines derartigen Steuerungssystems.

In einem Kraftfahrzeug mit automatischem Getriebe, insbesondere mit automatischem Stufengetriebe, kann ein Steuerungssystem zum Einsatz kommen, bei dem in einer Steuerautomatik ein für die jeweilige Fahrsituation geeigneter Getriebegang ermittelt wird. Dabei wird in Abhängigkeit von für die Fahrsituation charakteristischen Betriebsparametern, wie beispielsweise der Fahrgeschwindigkeit, der Motordrehzahl und/oder einer Querbeschleunigung, der für die daraus ermittelte Fahrsituation günstigste Getriebegang als Zielgetriebegang ermittelt. Die Auswahl des als Zielgetriebegangs geeigneten Getriebegangs kann dabei insbesondere durch Auswertung von im Steuerungssystem hinterlegten Kennlinien über die Drosselklappenstellung und die Fahrzeuggeschwindigkeit oder auch durch Bestimmung einer optimalen Motordrehzahl und anschließende Diskretisierung, d. h. Zuordnung zu demjenigen Getriebegang, dessen Drehzahlspektrum die optimale Motordrehzahl abdeckt, erfolgen. Falls der so ermittelte Zielgetriebegang vom aktuell eingestellten Getriebegang abweicht, kann eine Umschaltung vom aktuellen Getriebegang in den Zielgetriebegang angefordert und ein dies auslösender Schaltbefehl ausgegeben werden.

Alternativ oder zusätzlich zu einer derartigen Vorgabe des Zielgetriebeganges kann auch eine auf den Fahrerwunsch hin aktivierbare manuelle Vorgabe eines Zielgetriebegangs vorgesehen sein. Dabei kann beispielsweise durch eine Eingabe über einen Wählhebel der Zielgetriebegang unmittelbar vom Fahrer eingegeben werden. Ein zur Berücksichtigung einer derartigen manuellen Eingabe ausgelegtes Steuerungssystem für das Kraftfahrzeug-Automatikgetriebe umfaßt somit eine Anzahl von Gangwahlmodulen, von denen jedes jeweils für die Vorgabe eines Zielgetriebegangs unter anderen Randbedingungen ausgelegt ist. Ein erstes dieser Gangwahlmodule kann den Zielgetriebegang dabei in der Art einer automatisierten Steuerung durch Auswertung von für die Fahrsituation charakteristischen Meßwerten als Betriebsparametern vorgeben. Ein weiteres Gangwahlmodul kann hingegen für die Vorgabe des Zielgetriebegangs anhand von vom Fahrer manuell eingegebenen Betriebsparametern ausgelegt sein. Weiterhin können noch zusätzliche, an jeweils andere Fahrsituationen oder Betriebsparameter angepaßte Gangwahlmodule vorgesehen sein. Sobald eines dieser in logischer Hinsicht parallel geschalteten Gangwahlmodule einen Zielgetriebegang vorgibt, kann eine Umschaltung des Getriebegangs in diesen Zielgetriebegang vorgesehen sein.

Allerdings kann es in bestimmten Fahrsituationen wünschenswert sein, entgegen einer von einem der Gangwahlmodule gerade ermittelten Vorgabe eines Zielgetriebegangs gerade nicht in diesen umzuschalten. Beispielsweise kann bei einer Kurvenfahrt mit vergleichsweise hoher Geschwindigkeit eine Umschaltung des Getriebegangs unerwünscht sein, um mögliche Instabilitäten bei der Kurvendurchfahrt zu vermeiden. In einem anderen Fall kann es wünschenswert sein, sogenannte Pendelschaltungen sicher zu verhindern. Eine Pendelschaltung kann dann auftreten, wenn sich eine oder mehrere der die Gangwahl bestimmenden Betriebsparameter in einer Weise ändern, die eine kontinuierliche Abfolge von Hoch- und Rückschaltungen bewirken würde.

Für derartige situationsabhängige Schaltverhinderungen kann das Steuerungssystem eine Anzahl von Analysemodulen umfassen, von denen jedes bei Vorliegen einer jeweils vorgebbaren Betriebssituation ein Unterdrückungssignal zur Verhinderung einer Umschaltung erzeugt. Als vorgebbare Betriebssituationen können dabei beispielsweise Situationen, die zu den genannten Pendelschaltungen führen könnten, oder eine Situation wie "schnelle Kurvendurchfahrt" berücksichtigt sein. Das Unterdrückungssignal kann dann innerhalb des Steuerungssystems dazu herangezogen werden, den infolge der Vorgabe eines Zielgetriebevorgangs durch eines der Gangwahlmodule erzeugten Umschaltbefehl zu ignorieren oder seine Ausführung zu unterbinden. Ein solches gattungsgemäßes Steuerungssystem ist aus der DE 197 49 132 A1 bekannt.

Aus der DE 196 24 061 A1 ist ein Verfahren zur Steuerung des Gangwechsels eines Kraftfahrzeug-Automatikgetriebes bekannt, das zur Verhinderung von Pendelschaltungen ausgelegt ist. Bei diesem Verfahren wird ein Schaltbefehl zur Umschaltung des Getriebegangs in einen Zielgetriebegang nur dann ausgeführt, wenn eine Anzahl vorgebbarer Kriterien erfüllt sind. Dabei ist zur Verhinderung von Pendelschaltungen insbesondere vorgesehen, daß als ein Kriterium eine parameterabhängige Mindestwartezeit nach Ausführung einer Umschaltung abzuwarten ist, bevor eine erneute Umschaltung vorgenommen werden darf. Dieses Verfahren ist jedoch einerseits ausschließlich auf die Verhinderung von Pendelschaltungen ausgerichtet und sieht andererseits nicht unmittelbar eine gleichberechtigte Behandlung verschiedener mit der Vorgabe eines Zielgetriebevorgangs befaßter Gangwahlmodule vor und ist somit nur beschränkt flexibel einsetzbar.

Der Erfindung liegt daher die Aufgabe zugrunde, ein Steuerungssystem für ein Kraftfahrzeug-Automatikgetriebe der oben genannten Art anzugeben, das durch einen geeigneten Einsatz von Schaltverhinderungen eine besonders einfache und transparente Anpassung des Fahrzeugverhaltens auch an unterschiedliche Fahranforderungen ermöglicht. Desweiteren soll ein zum Betreiben des Steuerungssystems besonders geeignetes verfahren angegeben werden.

Bezüglich des Steuerungssystems wird diese Aufgabe erfindungsgemäß durch die Merkmale des Anspruchs 1 gelöst.

Die Erfindung geht dabei von der Überlegung aus, daß eine besonders einfache Anpassung des Fahrzeugverhaltens auch an unterschiedliche Anforderungen erreichbar ist, indem einerseits eine Mehrzahl möglicher Quellen für die jeweils parameterabhängige Vorgabe eines Zielgetriebegangs und andererseits eine Mehrzahl möglicher Module zur bedarfsabhängigen Sicherstellung von Schaltverhinderungen geeignet zusammengefaßt werden. Dabei erlaubt die in der Art einer parallelen Bearbeitung mehrerer Quellen für die Vorgabe des Zielgetriebegangs ausgestaltete Einbindung mehrerer Gangwahlmodule, daß in jedem Gangwahlmodul in Abhängigkeit von dort spezifisch hinterlegten Randbedingungen eine dementsprechende Vorgabe eines Zielgetriebegangs gemacht werden kann. Andererseits erlaubt die Verwendung mehrerer Analysemodule, daß in jedem Analysemodul jeweils eine spezifische Unterdrückung unerwünschter Schaltvorgänge implementiert werden kann. Allerdings sollte bei einem derartig vielkanalig ausgestalteten System sichergestellt sein, daß einerseits ein positives Zusammenwirken aller Komponenten gewahrt bleibt, und daß andererseits einander widersprechende Vorgaben und Schaltbefehle sicher vermieden sind. Dazu ist für jedes Analysemodul ein Filtermodul implementiert, das unter diesem Gesichtspunkt die Weiterleitung des möglicherweise generierten Unterdrückungssignals stoppt oder freigibt. Insbesondere ist vorgesehen, bei der Entscheidung darüber, ob die Vorgabe eines Zielgetriebegangs zur Erzeugung eines Schaltbefehls weitergeleitet oder vielmehr aufgrund fahrspezifischer Erwägungen unterdrückt werden soll, die Quelle oder die Herkunft zu berücksichtigen, aus der die Vorgabe für den Zielgetriebegang stammt.

Die Filterelemente können dabei in der Art einer dezentralen Ausgestaltung jeweils unmittelbar in die entsprechenden Analysemodule integriert sein. Dabei oder auch bei einer alternativ möglichen Zusammenfassung der Filterelemente zu einem zentralen Filterbaustein sind die Filterelemente zweckmäßigerweise von einem zentralen Kontrollmodul aus ansteuerbar, so daß ein systematisches und konsistentes Zusammenwirken der Filterelemente gewährleistet ist.

Für eine besonders hohe Flexibilität des Steuerungssystems ist dabei vorteilhafterweise im zentralen Kontrollmodul in der Art einer applizierbaren Matrix für jedes Analysemodul hinterlegt, für welches den Zielgetriebegang vorgebende Gangwahlmodul ein möglicherweise generiertes Unterdrückungssignal weiterzuleiten ist. In dieser Ausgestaltung ist das Kontrollmodul in der Art eines Kriterienverwalters ausgebildet. In Form der applizierbaren Matrix kann dabei beispielsweise hinterlegt sein, daß ein vom Analysemodul "Pendelschaltverhinderung" erzeugtes Unterdrückungssignal innerhalb des Steuerungssystems weiterzuleiten ist, wenn die Vorgabe des Zielgetriebegangs von einem automatisierten Steuerungsblock als Gangwahlmodul stammt, daß das Unterdrückungssignal jedoch nicht weiterzuleiten ist, falls die Vorgabe des Zielgetriebegangs von einem vom Fahrer unmittelbar betätigten Wählhebel als Gangwahlmodul stammt. Somit ist auf besonders einfache Weise eine Vorgabe realisierbar, daß einerseits bei automatisierter Gangauswahl Pendelschaltungen sicher verhindert werden sollen, daß aber andererseits bei manueller Gangauswahl der Fahrerwunsch unmittelbar befolgt werden soll.

Durch die Hinterlegung der Zuordnung, für welches vorgebende Gangwahlmodul ein Unterdrückungssignal welches Analysemoduls weiterzuleiten ist, in der Art einer applizierbaren Matrix im zentralen Kontrollmodul ist zudem eine besonders hohe Flexibilität und insbesondere eine nicht auf den konkreten Fahrzeugtyp beschränkte Einsetzbarkeit des Steuerungssystems gewährleistet. Abhängig vom Fahrzeugtyp kann nämlich beispielsweise eine unterschiedliche Priorisierung einzelner Gangwahlmodule vorgesehen sein: Bei einem mehr sportlich orientierten Fahrzeugtyp kann beispielsweise einer manuellen Gangvorgabe eine höhere Priorität beizumessen sein als einer automatisch generierten Gangvorgabe. In diesem Fall könnte somit bei manueller Vorgabe eines Zielgetriebegangs eine Pendelschaltverhinderung ausgeschlossen sein, wohingegen bei automatischer Vorgabe eines Zielgetriebevorgangs eine Pendelschaltverhinderung zulässig wäre. Demgegenüber könnte bei einem mehr auf komfortable Fahrweise ausgerichteten Fahrzeugtyp sowohl bei manueller als auch bei automatisierter Vorgabe des Zielgetriebegangs eine Pendelschaltverhinderung zulässig sein. Das Steuerungssystem ist insbesondere mit seinen Hardwarekomponenten für diese beiden Typen gleichermaßen einsetzbar, wobei die individuelle Anpassung an den jeweiligen Fahrzeugtyp lediglich in Form einer entsprechenden Modifikation der im Kontrollmodul hinterlegten applizierbaren Matrix und somit mit vergleichsweise geringem Aufwand erfolgen kann.

Zur unmittelbaren Beeinflussung der von den Analysemodulen erzeugten Unterdrückungssignale ist das zentrale Kontrollmodul zweckmäßigerweise ausgangsseitig mit jedem jeweils einem Analysemodul zugeordneten Filterelement zur Übermittlung eines Freigabesignals verbunden. Das Freigabesignal kann dabei das Filterelement "öffnen" und somit die Weiterleitung eines eventuell vorliegenden Unterdrückungssignals ermöglichen.

Die Berücksichtigung des Herkunft der Vorgabe des jeweiligen Zielgetriebegangs ist auf besonders einfache Weise erreichbar, indem in vorteilhafter Ausgestaltung jedes Gangwahlmodul jeweils in zeitlichem Zusammenhang mit der Vorgabe eines Zielgetriebegangs eine das vorgebende Gangwahlmodul identifizierende Kennung an die Filterelemente oder an das zentrale Kontrollmodul übermittelt.

Bezüglich des Verfahrens wird die genannte Aufgabe durch die Merkmale des Anspruchs 6 gelöst, indem ein von einem Analysemodul erzeugtes Unterdrückungssignal in Abhängigkeit davon zur Weiterleitung freigegeben wird, von welchem Gangwahlmodul der Zielgetriebegang vorgegeben wurde.

Die mit der Erfindung erzielten Vorteile bestehen insbesondere darin, daß durch die Berücksichtigung der Herkunft einer Vorgabe für einen Zielgetriebegang bei der Entscheidung, ob eine Unterdrückung der Umschaltung in diesen Zielgetriebegang im Sinne einer Schaltverhinderung erfolgen soll, eine in logischer Hinsicht parallele Bearbeitung verschiedener Gangauswahlen und eine in logischer Hinsicht parallele Bearbeitung verschiedener Kriterien für Schaltverhinderungen auf besonders einfache Weise ermöglicht ist. Zudem ist durch die Hinterlegung der entsprechenden Zuordnung in Form einer applizierbaren Matrix im zentralen Kontrollmodul das Steuerungssystem besonders vielfältig und flexibel einsetzbar, wobei insbesondere eine besonders einfache nachträgliche Anpassung an modifizierte Vorgaben sowie eine universelle Einsetzbarkeit auch bei verschiedenen Fahrzeugtypen hervorzuheben ist.

Ein Ausführungsbeispiel der Erfindung wird anhand einer Zeichnung näher erläutert. Darin zeigen:
- Figur 1: schematisch einen Antriebsstrang eines Kraftfahrzeugs mit zugeordnetem Steuerungssystem, und
- Figur 2: schematisch das Steuerungssystem nach Figur 1 im Detail.

Gleiche Teile sind in beiden Figuren mit denselben Bezugszeichen versehen.

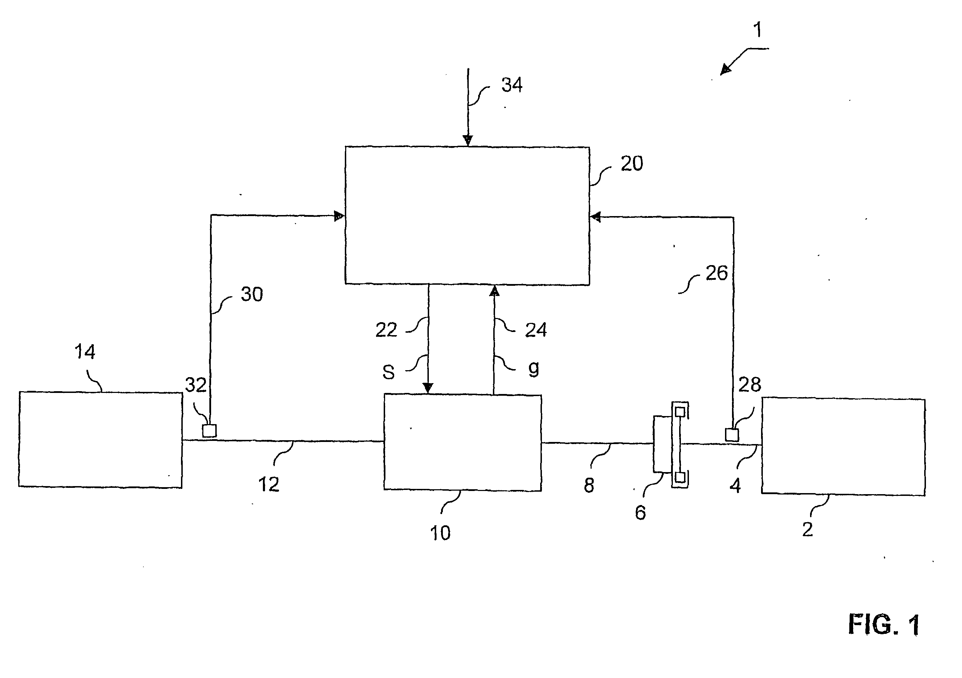

Der Antriebsstrang 1 gemäß Figur 1 weist einen Fahrzeugmotor 2 auf, der über eine Eingangswelle 4 mit einer Kupplung 6 verbunden ist. Die Kupplung 6 ist ausgangsseitig über eine Welle 8 mit einem Automatikgetriebe 10 verbunden, das seinerseits ausgangsseitig oder abtriebsseitig über eine Antriebswelle 12 mit einer Antriebseinheit 14 eines Kraftfahrzeugs, beispielsweise mit einem Antriebsradsatz, verbunden ist. Die Kupplung 6 ist im Ausführungsbeispiel als hydrodynamischer Wandler ausgeführt; alternativ kann aber auch eine servo-betätigte Reibkupplung oder eine andere, zur Herstellung einer schlupfenden, nicht formschlüssigen Verbindung zwischen Fahrzeugmotor 2 und Antriebseinheit 14 geeignete Kupplung vorgesehen sein. Das Automatikgetriebe 10 ist als Stufengetriebe ausgebildet und weist eine Anzahl vordefinierter Getriebegänge auf, denen jeweils ein festes Verhältnis der Drehzahlen der Welle 8 und der Antriebswelle 12 zugeordnet ist. Ein Wechsel zwischen den Getriebegängen ist dabei durch Zuführung eines Schaltbefehls S an das Automatikgetriebe auslösbar.

Zur Steuerung ist dem Automatikgetriebe 10 ein Steuerungssystem 20 zugeordnet. Das Steuerungssystem 20 ist dafür ausgelegt, die für die aktuelle Fahrsituation gewünschte Getriebeübersetzung zu ermitteln und durch Übermittlung eines entsprechenden Schaltbefehls S an das Automatikgetriebe 10 einzustellen. Dazu ist das Steuerungssystem 20 ausgangsseitig über eine Signalleitung 22 mit dem Automatikgetriebe 10 verbunden. Eingangsseitig ist das Steuerungssystem 20 über einer Signalleitung 24 mit dem Automatikgetriebe 10, über eine Signalleitung 26 mit einem an der Eingangswelle 4 angeordneten Drehzahlsensor 28, über eine Signalleitung 30.mit einem an der Antriebswelle 12 angeordneten Drehzahlsensor 32 und über eine Anzahl weiterer, durch den Pfeil 34 angedeuteten Signalleitungen mit einer Anzahl weiterer, nicht näher dargestellter Meßwertsensoren verbunden.

Dabei ist dem Steuerungssystem 20 über die Signalleitung 24 ein Istwert für den aktuell eingelegten Getriebegang g zuführbar. Über die Signalleitungen 26, 30 sind dem Steuerungssystem 20 Istwerte für die Drehzahl der Eingangswelle 4 oder Motordrehzahl nm bzw. für die Drehzahl na der Antriebswelle 12 zuführbar. Aus der Drehzahl na ist dabei ein Istwert für die Fahrzeuggeschwindigkeit ableitbar. Alternativ kann auch die separate Erfassung der Drehzahl jedes einzelnen Rades des Fahrzeugs vorgesehen sein, wobei daraus neben der Fahrzeuggeschwindigkeit noch weitere relevante Meßgrößen wie beispielsweise Schlupf eines Antriebsrades ableitbar sein können. Ferner sind dem Steuerungssystem 20 über die durch den Pfeil 34 angedeuteten weiteren Signalleitungen Istwerte weiterer relevanter Meßgrößen oder Betriebsparameter, beispielsweise von Beschleunigungssensoren, einer Drosselklappenstellung oder einer Kraftstoffzufuhr, aber auch von einer Eingabevorrichtung zum manuellen Eingeben eines Gangwunsches durch den Fahrer, zuführbar.

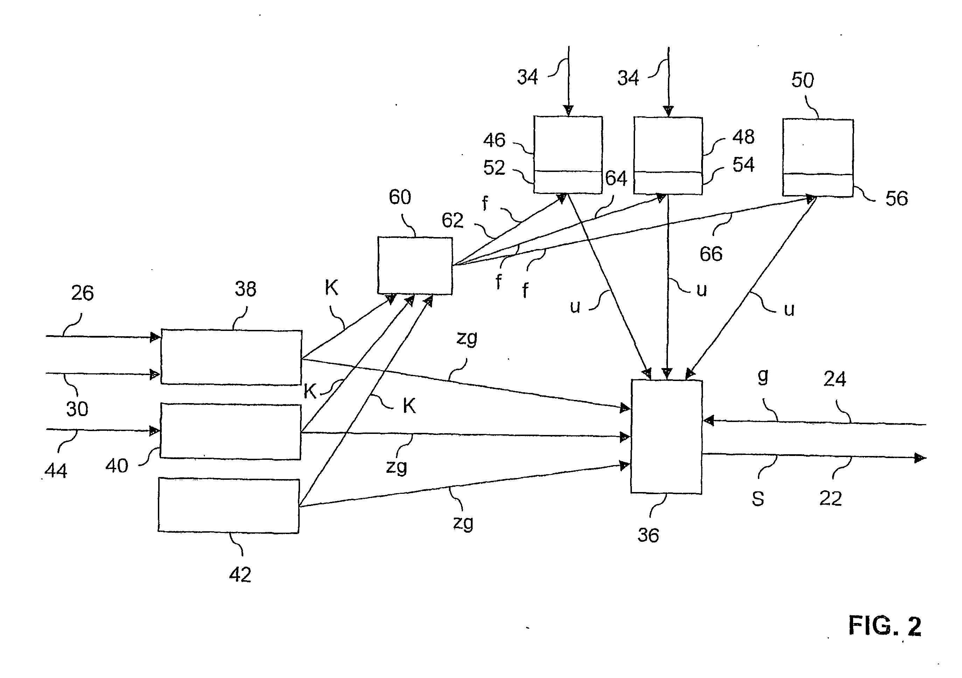

Der innere Aufbau des Steuerungssystems 20 ist schematisch in Figur 2 dargestellt. Das Steuerungssystem 20 umfaßt eine Hauptsteuereinheit 36, die zur Ausgabe von Schaltsignalen S an die Signalleitung 22 und zum Einlesen des Istwertes des aktuell eingelegten Getriebegangs g an die Signalleitung 24 angeschlossen ist.

Eingangsseitig ist die Hauptsteuereinheit 36 mit einer Mehrzahl von Gangwahlmodulen 38, 40, 42 verbunden. Jedes Gangwahlmodul 38, 40, 42 ist jeweils für die Vorgabe eines Zielgetriebegangs zg in Abhängigkeit von einer Anzahl von spezifischen Betriebsparametern ausgelegt. Bei Zuführung eines vorgegebenen Zielgetriebegangs zg zur Hauptsteuereinheit 36 prüft diese, ob der Zielgetriebegang zg mit dem derzeit aktuellen Getriebegang g des Automatikgetriebes 10 übereinstimmt. Ist dies nicht der Fall, so gibt die Hauptsteuereinheit 36 vorbehaltlich der noch darzustellenden Einschränkungen einen Schaltbefehl S an das Automatikgetriebe 10 aus, der dort eine Umschaltung in den Zielgetriebegang zg auslöst.

Das erste Gangwahlmodul 38 ist in der Art einer konventionellen automatisierten Gangwahleinrichtung ausgelegt und seinerseits eingangsseitig unter anderem mit den Signalleitungen 26, 30 verbunden. Das erste Gangwahlmodul 38 bestimmt anhand einer Anzahl von ihm zuführbaren Meßwerten als Betriebsparameter, insbesondere anhand der Drehzahl na der Antriebswelle 12 und eines für die Drosselklappenstellung des Fahrzeugmotors 2 charakteristischen Meßwerts, und auf der Grundlage einer hinterlegten, für den Betrieb des Fahrzeugmotors besonders günstigen Motordrehzahl nm ein gewünschtes Drehzahlverhältnis oder Übersetzungsverhältnis des Automatikgetriebes 10. Aus diesem ermittelt das erste Gangwahlmodul 38 durch geeignete Diskretisierung und anschließende Zuordnung zu den den einzelnen Getriebegängen zugeordneten Drehzahlbereichen einen besonders geeigneten Zielgetriebegang zg, den es als Vorgabe an die Hauptsteuereinheit 36 ausgibt.

Das zweite Gangwahlmodul 40 ist im Gegensatz dazu zur Verarbeitung eines vom Fahrer direkt vorgegebenen, beispielsweise über einen nicht näher dargestellten Wähl- oder Tiphebel eingebbaren Gangwunsches als Betriebsparameter ausgelegt. Es stellt den ihm über eine Eingabeleitung 44 zugeführten Gangwunsch unmittelbar als Zielgetriebegang zg bereit.

Das dritte Gangwahlmodul 42 kann ebenso wie weitere, möglicherweise noch zusätzlich vorgesehene Gangwahlmodule zur Bereitstellung einer Vorgabe für einen Zielgetriebegang zg auf anderer Grundlage ausgebildet sein. Dementsprechend sind der Hauptsteuereinheit 36 jederzeit in der Art einer parallelen Bearbeitung einer oder mehrere Vorgaben für einen Zielgetriebegang zg zuführbar.

Weiterhin ist die Hauptsteuereinheit 36 eingangsseitig mit einer Anzahl von Analysemodulen 46, 48, 50 verbunden. Die Analysemodule 46, 48, 50 sind dabei derart ausgelegt, daß sie für eine jeweils spezifisch vorgebbare Betriebssituation ein Unterdrückungssignal u erzeugen. Falls das jeweilige Unterdrückungssignal u der Hauptsteuereinheit 36 zugeführt wird, so bewirkt es dort, daß auch bei einer Abweichung der der Hauptsteuereinheit 36 zugeführten Vorgabe des Zielgetriebegangs zg vom aktuellen Getriebegang g eine Umschaltung unterbleibt und die Ausgabe des Schaltsignals S an das Automatikgetriebe 10 unterdrückt wird.

Das erste Analysemodul 46 ist dabei in der Art einer Pendelschaltverhinderung ausgebildet und soll sicherstellen, daß insbesondere bei im wesentlichen unveränderter Fahrpedalstellung infolge von sich geringfügig ändernden äußeren Bedingungen eine andauernde Abfolge von Umschaltungen in den nächsthöheren und sodann wieder in den nächstniedrigeren Getriebegang verhindert ist. Dazu ist das Analysemodul 46 mit einer Anzahl der durch den Pfeil 34 symbolisierten weiteren Signalleitungen verbunden, über die dem Analysemodul 46 insbesondere Meßwerte zur Fahrzeuggeschwindigkeit, zur Fahrpedalstellung, zur Motordrehzahl nm etc. zuführbar sind.

Das zweite Analysemodul 48 ist als Schaltverhinderung für Kurvenfahrten ausgebildet und soll verhindern, daß insbesondere bei schnellen Kurvenfahrten eine zu frühe Umschaltung in den nächsthöheren Getriebegang erfolgt, die einen Traktionsverlust oder sonstige kurzzeitige Instabilitäten im Fahrverhalten begünstigen könnte. Dazu ist das zweite Analysemodul insbesondere zur Erkennung des Betriebszustands "schnelle Kurvenfahrt" ausgebildet und eingangsseitig unter anderem derart mit einer Anzahl der durch den Pfeil 34 symbolisierten weiteren Signalleitungen verbunden, daß ihm als Betriebsparameter Meßwerte betreffend die Fahrzeuggeschwindigkeit und die Fahrzeugquerbeschleunigung zuführbar sind.

Das dritte Analysemodul 50 kann ebenso wie weitere, möglicherweise noch zusätzlich vorgesehene Analysemodule in der Art einer Schaltverhinderung für weitere standardisierbare Betriebssituationen ausgebildet sein. Dementsprechend sind der Hauptsteuereinheit 36 jederzeit in der Art einer parallelen Verarbeitung eines oder mehrere Unterdrückungssignale u zur Verhinderung einer Umschaltung zuführbar.

Mit anderen Worten: das Steuerungssystem 20 ist derart ausgebildet, daß der Hauptsteuereinheit 36 in der Art einer parallelen Bereitstellung sowohl Vorgaben für einen Zielgetriebegang zg als auch Unterdrückungssignale u zur Verhinderung einer Umschaltung auf jeweils parallelen Kanälen zuführbar sind. Gerade bei der Verarbeitung der Unterdrückungssignale u wird dabei eine Verknüpfung in der Art einer logischen "oder"-Verknüpfung vorgenommen: bei Vorliegen mindestens eines Unterdrückungssignals u, in der Hauptsteuereinheit 36, unabhängig davon, von welchem Analysemodul 46; 48, 50 es erzeugt wurde, wird die Ausgabe des Schaltsignals S unterbunden und eine Umschaltung somit verhindert.

Das Steuerungssystem 20 ist dabei derart ausgestaltet, daß auch bei der vergleichsweise hohen Komplexität einerseits Inkonsistenzen bei der Verarbeitung vermieden sind, und daß andererseits eine besonders hohe Flexibilität bei der Adaption auf neue oder weitere Vorgaben ermöglicht ist. Dazu ist jedem Analysemodul 46, 48, 50 jeweils ein Filterelement 52, 54 bzw. 56 zugeordnet. Im Ausführungsbeispiel ist das jeweilige Filterelement 52, 54, 56 in das entsprechende Analysemodul 46, 48 bzw. 50 integriert; es kann aber auch separat von diesem ausgeführt und ihm im Hinblick auf die Verarbeitung des jeweiligen Unterdrückungssignals u nachgeschaltet sein. Jedes Filterelement 52, 54, 56 ist derart ausgebildet, daß es die Weiterleitung eines vom zugeordneten Analysemodul 46, 48 bzw. 50 erzeugten Unterdrückungssignals u in Abhängigkeit davon freigibt, von welchem Gangwahlmodul 38, 40, 42 der Zielgetriebegang zg vorgegeben wurde.

Auf diese Weise ist sichergestellt, daß die Herkunft des Vorschlags für den Zielgetriebegang zg bei der Entscheidung berücksichtigt wird, ob eine gewisse Schaltverhinderung im Zusammenhang mit der durch die Vorgabe des Zielgetriebegangs zg angestrebten Umschaltung zulässig sein kann oder nicht. Beispielsweise kann das dem Analysemodul 46 zugeordnete Filterelement 52 für folgende Randbedingungen ausgelegt sein: Das Analysemodul 46 ist als Pendelschaltverhinderung ausgebildet. Nun kann vorgesehen sein, daß eine Pendelschaltverhinderung dann als zulässig angesehen werden soll, wenn die Vorgabe des Zielgetriebegangs zg von der automatischen Getriebesteuerung und somit vom ersten Gangwahlmodul 38 vorgegeben wurde, daß eine Pendelschaltverhinderung aber als unzulässig angesehen werden soll, wenn die Vorgabe des Zielgetriebegangs zg durch manuelle Eingabe und somit über das zweite Gangwahlmodul 40 erfolgte. Eine derartige Konstellation könnte beispielsweise einem sportlich ausgelegtem Fahrzeugtyp mit aktivem Fahrertypus entsprechen, bei dem der Fahrerwunsch grundsätzlich mit höchster Priorität zu behandeln wäre.

Um diese Randbedingung umzusetzen, kann das dem als Pendelschaltverhinderung ausgebildeten ersten Analysemodul 46 zugeordnete Filterelement 52 derart ausgestaltet sein, daß ein vom ersten Analysemodul 46 bei erkannter Gefahr einer Pendelschaltung erzeugtes Unterdrückungssignal u dann zur Verhinderung einer Umschaltung an die Hauptsteuereinheit 36 weitergeleitet wird, wenn die Vorgabe des Zielgetriebegangs zg vom ersten Gangwahlmodul 38 erfolgte, nicht aber, wenn die Vorgabe des Zielgetriebeganges zg vom zweiten Gangwahlmodul 40 erfolgte.

Für eine koordinierte Durchführung verschiedenartiger Voreinstellungen weist das Steuerungssystem 20 ein zentrales Kontrollmodul 60 auf. Dieses ist ausgangsseitig derart mit den Filterelementen 52, 54, 56 verbunden, daß diese durch das zentrale Kontrollmodul 60 ansteuerbar sind. Insbesondere ist das zentrale Kontrollmodul 60 ausgangsseitig mit jedem Analysemodul 46, 48, 50 über jeweils eine Signalleitung 62, 64 bzw. 66 verbunden, über die dem in das jeweilige Analysemodul 46, 48, 50 integrierten Filterelement 52, 54 bzw. 56 ein Freigabesignal f übermittelbar ist. Die Filterelemente 52, 54, 56 sind dabei derart ausgestaltet, daß ein vom zugeordneten Analysemodul 46, 48 bzw. 50 erzeugtes Unterdrückungssignal u nur dann an die Hauptsteuereinheit 36 weitergeleitet wird, wenn im Filterelement 52, 54 bzw. 56 ein darauf bezogenes Freigabesignal f vorliegt.

Eingangsseitig ist das zentrale Kontrollmodul 60 mit jedem der Gangwahlmodule 38, 40, 42 verbunden. Dabei ist vorgesehen, daß jedes Gangwahlmodul 38, 40, 42 dann, wenn es einen Zielgetriebegang Zg an die Hauptsteuereinheit 36 vorgibt, im zeitlichen Zusammenhang mit dieser Vorgabe eine das vorgebende Gangwahlmodul 38, 40, 42 identifizierende Kennung K an das zentrale Kontrollmodul 60 abgibt. Somit liegt im zentralen Kontrollmodul 60 in zeitlicher Koinzidenz mit der Vorgabe des Zielgetriebegangs zg an die Hauptsteuereinheit 36 eine Information vor, von welchem Gangwahlmodul 38, 40, 42 aus die Vorgabe erfolgte. Somit ist auch eine eventuell erforderliche Erzeugung und Bearbeitung eines entsprechenden Unterdrückungssignals u und dessen gefilterte Weiterleitung an die Hauptsteuereinheit 36 zeitnah ermöglicht, so daß die Vorgabe des Zielgetriebegangs zg und ein dazu eventuell vorliegendes Unterdrückungssignal u in der Hauptsteuereinheit 36 in der gewünschten Weise gemeinsam verarbeitet werden können.

Für eine besonders geeignete Berücksichtigung der Herkunft der Vorgabe des Zielgetriebegangs zg bei der Entscheidung, ob ein damit zusammenhängendes Unterdrückungssignal u zur Verhinderung einer Umschaltung führen soll oder nicht, ist im zentralen Kontrollmodul 60 in der Art einer applizierbaren Matrix für jedes Analysemodul 46, 48, 50 hinterlegt, für welches den Zielgetriebegang zg vorgebende Gangwahlmodul 38, 40, 42 ein entsprechendes Unterdrückungssignal u weiterzuleiten ist. Die Hinterlegung dieser Information in Form einer applizierbaren Matrix im zentralen Kontrollmodul 60 ermöglicht einen besonders einfachen Austausch dieser Information und somit in besonders einfacher Weise eine Adaption der Charakteristik des Steuerungssystems 20. Dadurch ist insbesondere auch eine besonders hohe Flexibilität des Steuerungssystems 20 und dessen Verwendbarkeit auch bei verschiedenen Fahrzeugtypen ermöglicht.

## Patentansprüche

1. Steuerungssystem (20) für ein Kraftfahrzeug-Automatikgetriebe (10) mit einer Mehrzahl von Gangwahlmodulen (38, 40, 42), von denen jedes jeweils für die Vorgabe eines Zielgetriebegangs (zg) für eine Umschaltung des Getriebegangs in Abhängigkeit von einer Anzahl von Betriebsparametern ausgelegt ist, und mit einer Anzahl von Analysemodulen (46, 48, 50), von denen jedes bei Vorliegen einer jeweils vorgebbaren Betriebssituation ein Unterdrückungssignal (u) zur Verhinderung einer Umschaltung erzeugt, **dadurch gekennzeichnet, daß** jedem Analysemodul (46, 48, 50) jeweils ein Filterelement (52, 54, 56) zugeordnet ist, das die Weiterleitung des jeweiligen Unterdrückungssignals (u) in Abhängigkeit davon freigibt, von welchem Gangwahlmodul (38, 40, 42) der Zielgetriebegang (zg) vorgegeben wurde.

2. Steuerungssystem (20) nach Anspruch 1, dessen Filterelemente 52, 54, 56 von einem zentralen Kontrollmodul 60 aus ansteuerbar sind.

3. Steuerungssystem (20) nach Anspruch 2, in dessen zentralem Kontrollmodul (60) in der Art einer applizierbaren Matrix für jedes Analysemodul (46, 48, 50) hinterlegt ist, für welches den Zielgetriebegang (zg) vorgebende Gangwahlmodul (38, 40, 42) das Unterdrückungssignal (u) weiterzuleiten ist.

4. Steuerungssystem (20) nach Anspruch 2 oder 3, dessen zentrales Kontrollmodul (60) ausgangsseitig mit jedem Analysemodul (46, 48, 50) zur Übermittlung eines Freigabesignals (f) verbunden ist.

5. Steuerungssystem (20) nach einem der Ansprüche 1 bis 4, dessen Gangwahlmodule (38, 40, 42) jeweils in zeitlichem Zusammenhang mit der Vorgabe eines Zielgetriebegangs (zg) eine das vorgebende Gangwahlmodul (38, 40, 42) identifizierende Kennung (K) an die Filterelemente (52, 54, 56) oder an das zentrale Kontrollmodul (60) abgeben.

6. Verfahren zum Betreiben eines Steuerungssystems (20) für ein Kraftfahrzeug-Automatikgetriebe (10) mit einer Mehrzahl von Gangwahlmodulen (38, 40, 42), von denen jedes jeweils für die Vorgabe eines Zielgetriebegangs (zg) für eine Umschaltung des Getriebegangs in Abhängigkeit von einer Anzahl von Betriebsparametern ausgelegt ist, und mit einer Anzahl von Analysemodulen (46, 48, 50), von denen jedes bei Vorliegen einer jeweils vorgebbaren Betriebssituation ein Unterdrückungssignal (u) zur Verhinderung einer Umschaltung erzeugt, **dadurch gekennzeichnet, daß** ein von einem Analysemodul erzeugtes Unterdrückungssignal (u) in Abhängigkeit davon zur Weiterleitung freigegeben wird, von welchem Gangwahlmodul (38, 40, 42) der Zielgetriebegang (zg) vorgegeben wurde.

## Claims

1. Control system (20) for a motor vehicle automatic transmission (10), with a plurality of gear selection modules (38, 40, 42), each of which is designed in each case for stipulating a target transmission gear (zg) for the changeover of the transmission gear as a function of a number of operating parameters, and with a number of analysis modules (46, 48, 50), each of which, in the presence of an operating situation predeterminable in each case, generates a suppression signal (u) for preventing a changeover, **characterized in that** each analysis module (46, 48, 50) is assigned in each case a filter element (52, 54, 56) which gives clearance for the transmission of the respective suppression signal (u) as a function of the gear selection module (38, 40, 42) by which the target transmission gear (zg) was stipulated.

2. Control system (20) according to Claim 1, the filter elements (52, 54, 56) of which can be activated from a central check module (60).

3. Control system (20) according to Claim 2, in the central check module (60) of which is filed for each analysis module (46, 48, 50), in the manner of an applicable matrix, for which gear selection module (38, 40, 42) stipulating the target transmission gear (zg) the suppression signal (u) is to be transmitted.

4. Control system (20) according to Claim 2 or 3, the central check module (60) of which is connected on the output side to each analysis module (46, 48, 50) for the transfer of a clearance signal (f).

5. Control system (20) according to one of Claims 1 to 4, the gear selection modules (38, 40, 42) of which send to the filter elements (52, 54, 56) or to the central check module (60), in each case in time relation to the stipulation of a target transmission gear (zg), an identification (K) which identifies the stipulating gear selection module (38, 40, 42).

6. Method for operating a control system (20) for a motor vehicle automatic transmission (10), with a plurality of gear selection modules (38, 40, 42), each of which is designed in each case for stipulating a target transmission gear (zg) for a changeover of the transmission gear as a function of a number of operating parameters, and with a number of analysis modules (46, 48, 50), each of which, in the presence of an operating situation predeterminable in each case, generates a suppression signal (u) for preventing a changeover, **characterized in that** a suppression signal (u) generated by an analysis module is cleared for transmission as a function of the gear selection module (38, 40, 42) by which the target transmission gear (z.g.) was stipulated.

## Revendications

1. Système de commande (20) pour une transmission automatique (10) de véhicule automobile comportant une pluralité de modules de sélection de rapport (38, 40, 42) dont chacun est étudié pour la prescription d'un rapport de transmission cible (zg) pour un changement de rapport en fonction d'un certain nombre de paramètres d'exploitation et comportant un certain nombre de modules d'analyse (46, 48, 50) dont chacun, lors de l'occurrence d'une situation d'exploitation chaque fois prescriptible, génère un signal de suppression (u) pour éviter un changement,
**caractérisé en ce que**
à chaque module d'analyse (46, 48, 50), un organe de filtrage (52, 54, 56) est chaque fois affecté qui autorise la transmission du signal de suppression (u) en fonction du module de sélection de rapport (38, 40, 42) qui a prescrit le rapport de transmission cible (zg).

2. Système de commande (20) selon la revendication 1,
dans lesquels
les organes de filtrage (52, 54, 56) peuvent être commandés à partir d'un module central de contrôle (60).

3. Système de commande (20) selon la revendication 2,
dans lequel
le module central de contrôle (60) contient à la manière d'une matrice applicable, pour chaque module d'analyse (46, 48, 50), le module de sélection de rapport (38, 40, 42) prescrivant le rapport de transmission cible (zg), auquel le signal de suppression (u) doit être transmis.

4. Système de commande (20) selon la revendication 2 ou 3,
dans lequel
le module central de contrôle (60), côté sortie, est raccordé avec chaque module d'analyse (46, 48, 50) pour la transmission d'un signal de libération (f).

5. Système de commande (20) selon l'une quelconque des revendications 1 à 4,
dans lequel
les modules de sélection de rapport (38, 40, 42) délivrent aux organes de filtrage (52, 54, 56) ou au module central de contrôle (60) une marque (k) identifiant le module de sélection de rapport (38, 40, 42) effectuant la prescription, chaque fois en rapport temporel avec la prescription d'un rapport de transmission cible (zg).

6. Procédé pour exploiter un système de commande (20) pour une transmission automatique (10) de véhicule automobile comportant une pluralité de modules de sélection de rapport (38, 40, 42) dont chacun est chaque fois disposé pour la prescription d'un rapport de transmission cible (zg) pour un changement de rapport en fonction d'un certain nombre de paramètres d'exploitation, et un certain nombre de modules d'analyse (46, 48, 50) dont chacun, à l'occurrence d'une situation d'exploitation chaque fois prescriptible, génère un signal de suppression (u) pour éviter un changement de rapport,
**caractérisé en ce qu'**
un signal de suppression (u) créé par un module d'analyse est autorisé à être transmis en fonction du module de sélection de rapport (38, 40, 42) qui a prescrit le rapport de transmission cible (zg).
